# EUROPEAN PATENT APPLICATION

(11) **EP 1 013 992 A2**
(43) Date of publication of application: **28.06.2000**
(21) Application number: 99124746.1
(22) Date of filing: 13.12.1999
(51) Int. Cl.: F23G 5/027, F23G 7/12

(54) **Disposal of toxic materials**

(30) Priority: 16.12.1998 IT MO980256
(71) Applicant: Bortolani, Giuseppe Nando, 41100 Modena (IT); Costarini, Ivano, 41019 Soliera (IT); Bonicelli, Ivo Domenico, 42013 Casalgrande (IT)
(72) Inventor: Bortalani, Giuseppe Nando, 41100 Modena (IT); Costarini, Ivano, 41019 Sollera (Modena) (IT); Bonicelli, Ivo Domenico, 42013 Casalgrande (Reggio Emilia) (IT)
(74) Representative: Luppi, Luigi

(57) **Abstract**

A system for disposing of tyres (2), or products containing polymeric substances in general, provides for supplying heat to the products in a treatment chamber (4): during the heat supplying air is prevented from entering the treatment chamber; owing to the system it is possible to limit the energetic consumption, to obtain derived products comprising a solid residue usable as gummy granulate, steel in wires and also combustible gas; the system is easily controllable and safe owing to a hydraulic seal that prevents air from entering the treatment chamber (4).

## Description

The invention relates to a system for disposing of tyres, and, more in general, products including polymeric substances.

The prior art includes mechanical systems for disposing of worn out tyres in which the tyres are ground, together with their respective metallic frameworks, and subsequently stored in controlled dumps. Therefore, a considerable reduction in volume is made possible, but a considerable space for the controlled gathering of the ground tyres is however required; besides a lot of energy is used for the grinding, the separation between metallic parts and rubber is not carried out, and control problems due to the stay of the products in the dumps must be faced.

Pyrolytic systems are also known, in which the tyres are subjected to a direct combustion and the combustion products are subsequently introduced into fume treatment devices.

Such systems are dangerous for the environment, owing to the dangerousness of the combustion products, they are difficult to control, because it is extremely difficult , indeed almost impossible, to stop the combustion process once started, in an emergency, in addition said systems produce fumes containing noxious substances that must be purified before being introduced into the environment.

Thus, there is the problem to provide systems for the treatment of polymeric products in general.

In a first aspect of the invention, a method is provided, that takes place by supplying heat to polymeric products in a treatment area, characterised in that during the heat supplying air is prevented from entering into the treatment area. In a second aspect of the invention, an apparatus is provided for disposing of products with a polymeric basis, comprising means for supplying heat to the products placed in a treatment area, characterised in that, means for preventing air from entering into the treatment area are provided.

In a preferred embodiment, the treatment area is defined by a chamber.

Therefore, when tyres, or other products with a polymeric basis, are treated there is no production of fumes to be treated subsequently in a purifying apparatus. On the contrary, it has been found that the gases produced by the tyres treatment are combustible and they may be used in alternative to conventional combustible gases.

Furthermore the treatment may be stopped at a stage in which a solid residue of the products, on one end made of an inert, corbonous granulated material that may be used for example as a constituting part of bituminous agglomerates, and, on the other end, made of metallic wires that may be reintroduced in the production cycle of the steel industry, is obtained.

In alternative, the treatment may be extended until the solid part completely sublimates, leaving only the metallic wires.

Owing to the invention, it is possible to completely recover the products to dispose of, which are resolved into derived products that are directly usable.

Furthermore a considerable reduction of the consumption is achieved with respect to the conventional grinding.

The invention will be better understood and put into practice with reference to the enclosed drawings, which show nonlimiting, exemplifying versions thereof, wherein:
Figure 1 is a schematic section of an apparatus for a discontinuous cycle treatment of tyres;
Figure 2 is a schematic section like that of Figure 1, but in a continuous cycle version.

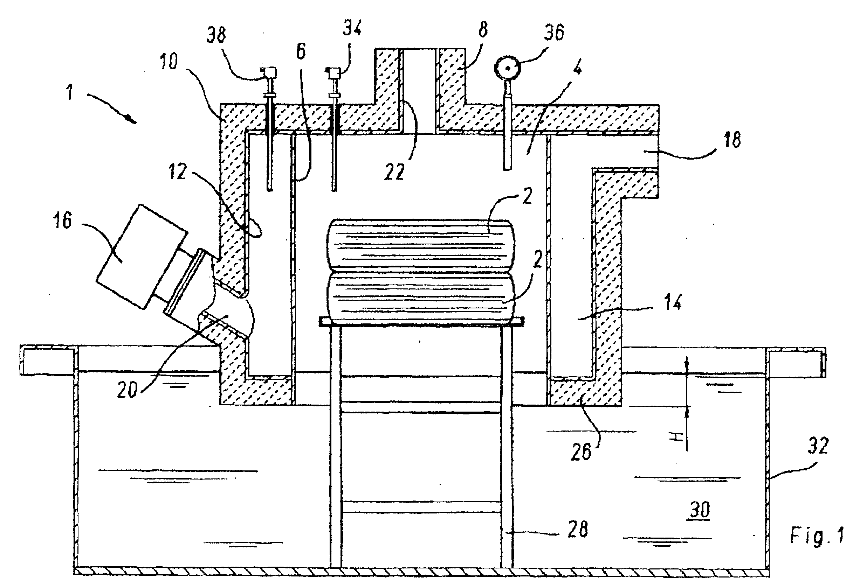

As shown in Figure 1, an apparatus 1 for the disposal of tyres 2 comprises a treatment chamber 4 defined by thermically conductive inner walls 6 of a case 8 externally coated by a layer 10 of a thermically insulating material. Between the layer 10 and the inner walls 6, the case 8 is provided with intermediate walls 12 that define, together with the inner walls 6, a hollow space 14 into which a heating fluid is introduced which is produced by a burner 16 associated to the hollow space 14 through an inlet 20 and from which the heating fluid is extracted through an outlet 18.

The walls 6 are provided with a exhaust opening 22 through which the combustible gases produced by the tyres 2 during the treatment are led.

The case 8 is bell-shaped with an open base 24, turned downwards, to allow the introduction from the bottom trough said open base of the tyres 2 on respective support means 28; besides the base 24 is bathed in a seal liquid 30, for example water, contained into a basin 32, so that a hydrostatic head H is defined: this prevents air from going into the chamber 4 during the treatment. Thus, when the treatment has been started, no more air than the amount possibly initially contained therein goes into the chamber 4.

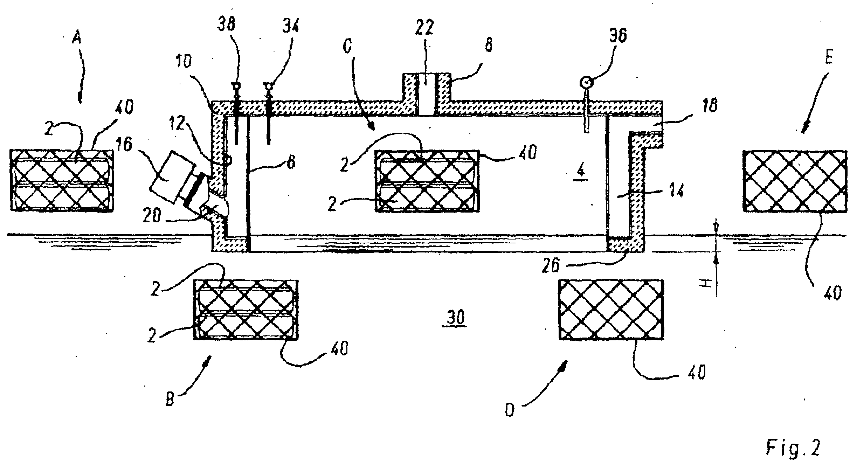

As shown in Figure 2, the tyres 2 are included into perforated container 40, for example having a net-shaped structure. The containers 40 are initially in a position A external to the chamber 4 and house the tyres 2 to be treated; they are subsequently introduced into the chamber 4 passing below the base 26 through the water 30 as indicated with B.

In the chamber 4, in the position indicated with C, the tyres 2 are subjected to the treatment; at the end of the treatment, the containers 40, wherein only the metallic wires of the framework and a possible carbonous residue are left, are extracted through the water 30 and are brought outwards passing through the positions indicated with D and E.

A first temperature sensor 34 and a pressure sensor 36 are also arranged in the chamber 4 to control the conditions of the gas produced by the tyres 2 during the treatment .

In the hollow space 14 a second temperature sensor 38 is arranged to control the temperature of the heating fluid.

During the treatment, a raising of the temperature in the chamber 4, the progressive sublimation of the volatile parts contained in the tyres 2 and the consequent production of a combustible gas that is extracted through the exhaust opening 22 take place.

Approximately, the temperature in the treatment chamber 4 is kept, in steady conditions, around 400-500 °C.

It is possible to control the cross section of the exhaust opening 22 so as to keep a preestablished pressure level in the chamber 4, during the treatment: thus it is not necessary to use extracting means to discharge the combustible gas from the chamber 4. When the pressure in the chamber 4 decreases, the treatment substantially ends up and the solid residues of the treatment that are made of carbonous granulated material and of the metallic wires that constituted the tyres framework are removed from the chamber 4. The solid residues are cooled by passing them through the water 30 and they are possibly subjected to vibration to detach the wires from the carbonous granulated material that initially covers them. By subjecting the solid residue to vibration a complete separation of the metallic parts in obtained, in a simple and inexpensive way.

The treatment takes place in safety conditions for the operator and for the environment: in fact, if it is necessary to break the treatment for emergency reasons, it is enough to break the heat supplying to the chamber 4 and to bathe the tyres 2 in the underlying water.

To save energy, it is possible to feed the burner 16 with the combustible gas extracted from the combustion chamber 4 during the treatment.

In this way, the consumption is considerably reduced, since it is necessary to supply combustible gas external to the treatment system only during the starting stage.

## Claims

1. Method for disposing of products including polymeric substances, that takes place by supplying heat to polymeric products (2) in a treatment area (4), characterised in that during said heat supplying air is prevented from entering into the treatment area (4).

2. Method according to claim 1, wherein said heat supplying is carried out by heating a heating fluid and by passing it at the outside of said treatment area (4), but in such thermic coupling conditions with said treatment area (4) that said treatment area (4) is internally heated by said heating fluid.

3. Method according to claim 2, wherein said heat supplying comprises the combustion of a combustible gas.

4. Method according to claim 3, wherein said combustible gas is extracted from said treatment area (4).

5. Method according to one of the preceding claims, wherein, at least during said heat supplying, the pressure in said treatment area (4) is detected.

6. Method according to one of the preceding claims, wherein said treatment area (4) is opened at the bottom and is kept therein in hydraulic seal conditions by a seal liquid (30).

7. Method according to claim 6, wherein said products (2) pass through said seal liquid (30) before being placed in said treatment area (4).

8. Method according to claim 6, or 7, wherein residual portions of said products (2) pass through said seal liquid (30) after the end of the treatment.

9. Apparatus for the disposal products with a polymeric basis, comprising means (14, 16, 18) for supplying heat to products (2) arranged in a treatment area (4), characterised in that means (22, 26, 30) are provided for preventing air from entering the treatment area (4).

10. Apparatus according to claim 9, and further comprising means (36) for controlling the pressure in said treatment area (4).

11. Apparatus according to claim 9, or 10, and further comprising means (34) for controlling the temperature in said treatment area (4).

12. Apparatus according to one of claims 9 to 11, wherein said means (14, 16, 18) for supplying heat to said treatment area (4) comprises hollow space means (14) arranged outwardly with respect to said area (4) and thermically coupled to it through thermically conductive wall means (6).

13. Apparatus according to claim 12 and any one of claims 9 to 11, wherein said means (14, 16, 18) for supplying heat to said treatment area (4) further comprises heat generating means (16) suitable to introduce a heating means into said hollow space means (14).

14. Apparatus according to claim 13, wherein said heat generating means comprises a gas burner (16) suitable to cause the introduction of a gas in said hollow space means (14).

15. Apparatus according to one of claims 12 to 14, wherein said hollow space means (14) are provided with an outlet (18) communicating with the outside.

16. Apparatus according to one of claims 11 to 14, wherein said hollow space means (14) comprises further means (38) for controlling the temperature in said hollow space means (14).

17. Apparatus according to one of claims 9 to 16, wherein said treatment area (4) is a bell-shaped chamber having an open portion in its base (26).

18. Apparatus according to claim 17, wherein said portion of base (26) is bathed in a seal liquid (30).

19. Apparatus according to one of claims 9 to 18, wherein said chamber (4) is provided with exhaust means (22) for extracting a gas generated by the treatment of the products (2).

20. Apparatus according to one of claims 9 to 19, and further comprising support means (28) suitable to support said products (2) in said treatment area (4).

21. Apparatus according to one of claims 9 to 20, and further comprising container means (40) suitable to contain and transfer said products (2) to and from said treatment area (4).
